# DEMANDE DE BREVET EUROPEEN

(11) **EP 0 588 742 A1**
(43) Date de publication de la demande: **23.03.1994**
(21) Numéro de dépôt: 93470021.2
(22) Date de dépôt: 09.09.1993
(51) Int. Cl.: F27D 21/00, G01J 5/04

(54) **Dispositif support d'un pyromètre optique et de son tube de visée sur la voûte d'un four industriel**

(30) Priorité: 18.09.1992 FR 9211174
(71) Demandeur: SOLLAC, F-92800 Puteaux (FR)
(72) Inventeur: Burlion, Robert, F-57100 Thionville (FR)
(74) Mandataire: Ventavoli, Roger

(57) **Abrégé**

Ce dispositif support comprend une enceinte (3) dans laquelle peut être placé le pyromètre (2), des moyens pour faire circuler un gaz neutre entre l'enceinte (3) et le pyromètre (2), et une seconde enceinte (5) contenant de manière étanche la première enceinte (3), des moyens pour insuffler tangentiellement de l'air comprimé entre les deux enceintes et l'évacuer à la base de la seconde enceinte afin de refroidir le tube (30) de visée, ainsi qu'un raccord (8) de centrage démontable reliant la seconde enceinte (5) au tube de visée (30), l'enceinte extérieure (5) étant également montée sur la voûte (1) du four par une suspension élastique formée d'amortisseurs (12). Cet agencement protège l'objectif du pyromètre (2) et le tube de visée des gaz de combustion du four grâce au gaz neutre injecté, tandis que l'air de refroidissement peut être de l'air industriel non nettoyé ; le pyromètre (2) et la première enceinte (3) peuvent en outre être aisément extraits du dispositif pour remplacement du pyromètre.

## Description

La présente invention a pour objet un dispositif support d'un pyromètre optique et de son tube de visée, destiné à être monté sur la voûte d'un four industriel, notamment un four à brames, de manière que la voûte soit traversée par le tube de visée.

On connaît une réalisation d'un dispositif de ce genre dans laquelle le pyromètre est monté dans un boîtier refroidi par une circulation d'air comprimé non déshuilé, qui circule entre le pyromètre et le boîtier. Il en résulte une pollution néfaste de l'appareil avec encrassement de son optique, et de l'huile peut pénètrer dans le pyromètre.

On a donc proposé comme solution d'utiliser de l'air d'"instrumentation", très propre. Mais une telle solution nécessite un débit d'air important pour permettre un refroidissement effectif, et implique donc des moyens onéreux.

On connaît également un autre dispositif support dans lequel le boîtier contenant le pyromètre est fixé sur le tube de visée par un mortier réfractaire. Cette liaison n'est pas démontable, et la dilatation différentielle entre le boîtier et le tube est susceptible de provoquer la rupture du tube de visée.

L'invention a donc pour but de proposer un dispositif support du pyromètre optique de son tube de visée qui ne comporte pas les inconvénients ci-dessus, et permette une mesure précise de la température des produits intérieurs au four, tout en assurant une protection efficace du pyromètre.

Le dispositif support de pyromètre optique visé par l'invention comprend une enceinte dans laquelle peut être placé le pyromètre, et des moyens pour faire circuler un gaz entre l'enceinte et le pyromètre.

Conformément à l'invention, ce dispositif support comprend une seconde enceinte enveloppant la première enceinte, ainsi qu'un raccord de centrage et de fixation démontable reliant la seconde enceinte au tube de visée.

Le gaz injecté entre le pyromètre et la première enceinte est avantageusement un gaz neutre tel que de l'azote qui protège l'objectif du pyromètre puis circule dans le tube de visée, chassant ainsi de celui-ci les gaz de combustion du four. Sans cette circulation de gaz, ces derniers risquent en effet d'absorber une partie des rayonnements infrarouges permettant la mesure.

Selon une autre forme de réalisation de l'invention, le raccord de centrage de la seconde enceinte comporte deux demi-coquilles juxtaposées axialement et enveloppant coaxialement le tube de visée, la demi-coquille supérieure étant fixée à l'extrémité inférieure de la seconde enceinte et solidarisée avec la demi-coquille inférieure par des organes de liaison élastiques, et ce raccord est pourvu de mors de positionnement des demi-coquilles, interposés entre ces dernières et le tube de visée sur lequel les mors sont pressés sous l'effet de rapprochement relatif des deux demi-coquilles, provoqué par les organes de liaison élastiques.

Un tel dispositif de raccordement peut être aisément démonté par desserrage des organes de liaison élastiques, qui peuvent être par exemple des systèmes boulons-écrous traversant des pattes latérales des demi-coquilles et associés à des ressorts.

Suivant une autre particularité de l'invention, le dispositif support est muni de moyens pour faire circuler de l'air de refroidissement entre la seconde et la première enceinte, ces moyens étant agencés pour insuffler l'air de préférence tangentiellement au sommet de l'espace intercalaire entre les deux enceintes.

Ainsi l'espace entre les deux enceintes est balayé par un fort débit d'air comprimé, qui n'a pas besoin d'être nettoyé et peut donc être de l'air non déshuilé et poussiéreux. Cet air comprimé est ensuite rejeté sur le raccord de fixation de la seconde enceinte au tube de visée, lequel s'en trouve refroidi, l'écran d'air ainsi créé diminuant les échanges par convection.

Le refroidissement est donc assuré par de l'air industriel non traité, mais le pyromètre ne risque pas d'être pour autant pollué car il est au contact avec un autre gaz propre.

D'autres particularités et avantages de l'invention apparaîtront au cours de la description qui va suivre, faite en référence au dessin annexé qui en illustre une forme de réalisation à titre d'exemple non limitatif.

La figure 1 est une vue mi-coupe verticale mi-élévation, à échelle réduite, d'une forme de réalisation du dispositif support d'un pyromètre optique et de son tube de visée, monté sur la voûte d'un four industriel.

La figure 2 est une vue de dessus partielle du raccord entre la seconde enceinte et le tube de visée du dispositif de la figure 1, la demi-coquille supérieure étant enlevée.

Le dispositif représenté au dessin est agencé pour être monté sur la voûte 1 d'un four industriel, par exemple un four métallurgique à brames, afin de supporter et de protéger un pyromètre optique 2, d'un type connu en soi et qui ne nécessite pas de description, et son tube de visée 30.

Ce dernier traverse verticalement la voûte 1, coaxialement à l'axe X-X du pyromètre 2, et a une longueur suffisante pour que son extrémité inférieure soit la plus proche possible du produit, et que la mesure de la température ne soit pas perturbée par une couche trop importante des gaz de combustion qui se trouvent dans le four et qui absorbent le rayonnement infrarouge capté par le pyromètre.

Le dispositif comporte une première enceinte 3 dans laquelle est placé le pyromètre 2 avec entre eux un espace annulaire 4 de faible largeur, et une seconde enceinte 5. Cette dernière enveloppe de manière étanche la première enceinte 3, un volume annulaire 6 de largeur d très supérieure à celle de l'espace annulaire 4 étant réservé entre les enceintes 3 et 5.

L'enceinte extérieure 5 est reliée par sa base 7 au tube de visée 30 par un raccord 8 de centrage démontable, qui sera décrit en détail ci-après.

La base 7 est fixée, par exemple par des boulons 9, à une platine 11 elle-même montée sur la voûte 1 par une suspension élastique constituée de plusieurs amortisseurs 12 convenablement répartis autour de l'enceinte 5.

La première enceinte 3 comporte deux parties tubulaires 13 et 14, coaxiales au pyromètre 2 et pourvues chacune d'une collerette radiale 13a,14a, assemblées par des boulons 15 de fixation. Un fond 16 percé d'une ouverture centrale 17, est fixé à l'extrémité inférieure de la partie tubulaire 13 par exemple par un système de collerettes 18,19 appartenant respectivement au fond 16 et à la partie 13, et par des boulons 21. La partie tubulaire supérieure 14 se termine à son extrémité supérieure par un couvercle 22 pouvant être fixé sur la seconde enceinte 5 de manière amovible, par exemple par des écrous 23 à oreilles. Le couvercle 22 est percé d'un conduit radial 24 contenant une connexion électrique 25 d'alimentation du pyromètre 2 par une source extérieure, et est muni d'une poignée manuelle 26 de préhension, permettant d'extraire l'enceinte 3 et le pyromètre 2 de l'enceinte 5, après enlèvement des écrous 23.

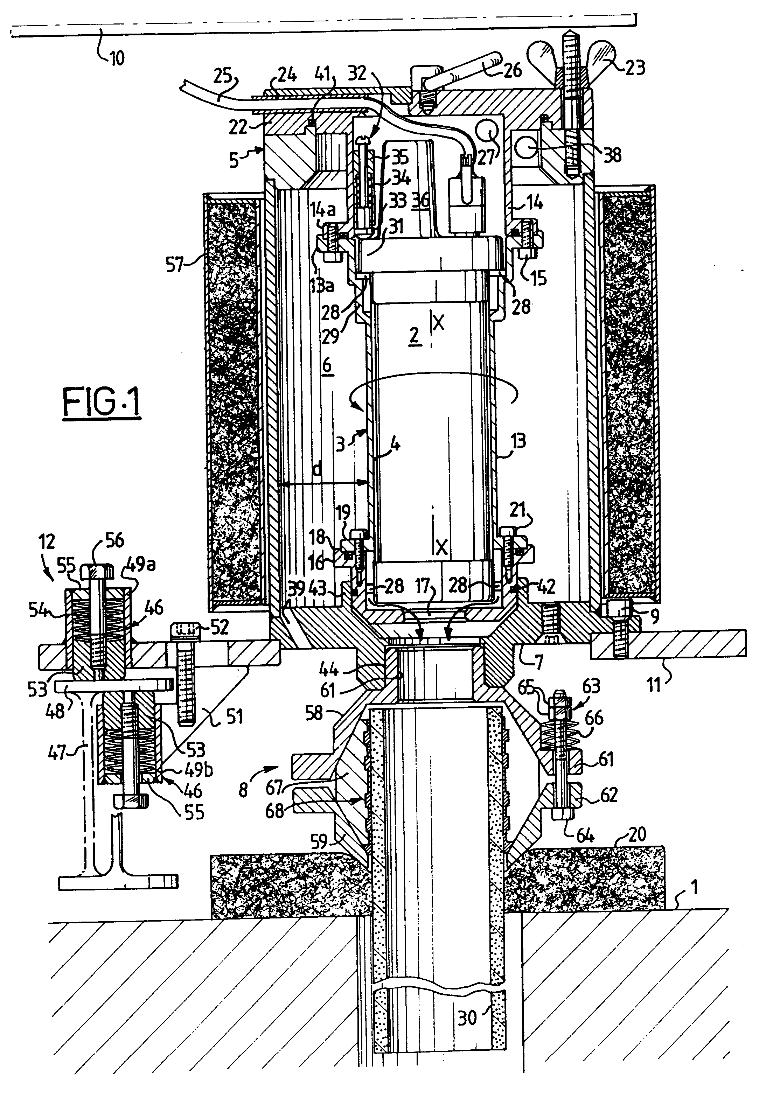

Par ailleurs, dans l'extrémité supérieure de l'enceinte 3 est percé un orifice 27 raccordé à un conduit non représenté, permettant d'injecter tangentiellement un gaz neutre tel que de l'azote, ou éventuellement un gaz propre, dans l'espace annulaire 4 entre le pyromètre 2 et l'enceinte 3. Ce gaz neutre peut s'échapper ensuite de l'enceinte 3 par l'ouverture inférieure 17 (flèches sur la figure 1) pour s'écouler ensuite, à travers le raccord 8, dans le tube de visée 30 et le four.

Le pyromètre 2 est centré sur son axe X-X par un épaulement 31 reposant sur une série de nervures radiales 28 disposées en appui sur un gradin. annulaire 29 formé intérieurement à l'enceinte 3. Les nervures 28 s'étendent tout autour du pyromètre 2 et délimitent entre elles des intervalles de passage du gaz neutre. Deux couronnes de nervures 28 sont ainsi disposées respectivement au-dessous des collerettes 13a et 16 du fond 42 et assurent un centrage convenable du pyromètre 2. Ce dernier est également maintenu axialement en position, grâce à une butée élastique 32 fixée à la face intérieure de la partie tubulaire 14 et contenant un piston 33. Ce dernier est poussé contre l'épaulement 31 par un ressort 34 intérieur à un corps 35, de manière que la tête du piston 33 maintienne l'épaulement 31 et par conséquent le pyromètre 2 en appui contre l'anneau de nervures 28.

Enfin, le pyromètre 2 est maintenu en rotation par un bossage 36 s'étendant axialement au-dessus de l'épaulement 31, en regard de la butée élastique 32.

La seconde enceinte 5 est percée à son extrémité supérieure d'une ouverture 38 communiquant avec un conduit non représenté, qui permet l'injection tangentielle d'air industriel, non déshuilé et non dépoussiéré, dans l'espace intercalaire 6. Cet air circule ainsi autour de l'enceinte 3 de manière tournante comme représenté par la flèche portée à la figure 1. Le fond 7 de l'enceinte 5 est percé de plusieurs ouvertures latérales telles que 39, orientées vers le raccord 8, afin d'assurer un refroidissement de ce dernier sur lequel l'air est ainsi dirigé. L'étanchéité entre l'enceinte extérieure 5 et l'enceinte intérieure 3 est assurée par plusieurs joints convenablement disposés, à savoir :
- un joint torique 41 à la jonction entre l'extrémité supérieure de l'enceinte 5 et le couvercle 22, et un joint torique 42 à la jonction entre une collerette axiale 43 de la base 7 et le fond 16 de l'enceinte 3, ces joints étant logés dans des gorges adéquates.

Le fond 7 est percé d'une ouverture centrale 44 coaxiale à l'ouverture 17 et au pyromètre 2, et fixé à la platine 11 équipée des amortisseurs 12 de suspension sur la voûte 1. Chaque amortisseur 12 comprend une paire de systèmes élastiques 46 agencés respectivement au-dessus et au-dessous de la platine 11, et coopérant avec des profilés appropriés 47 par exemple en I, de la voûte 1. Plus précisément chaque profilé en I 47 comporte une aile supérieure horizontale 48 avec les faces opposées de laquelle coopèrent les systèmes élastiques 46 de chaque amortisseur 12. Chaque système élastique 46 est constitué par un manchon 49a,49b respectif, solidaire de la platine 11 et perpendiculaire à celle-ci. Le manchon supérieur 49a traverse la platine 11 à laquelle il est soudé, tandis que le manchon inférieur 49b est soudé à une patte 51 fixée à la face inférieure de la platine 11 sous laquelle elle s'étend, et à laquelle elle est fixée par exemple par un boulon 52.

Chaque système élastique 46 comprend également un plot 53 en appui sur la face associée de l'aile 48 du profilé 47. Un ressort 54 est disposé dans le manchon correspondant 49a,49b, en appui sur le plot 53 et contre un fond 55 soudé au manchon 49a,49b. Le fond 55, le plot 53 et le ressort 54 sont traversés par un boulon 56 de centrage du ressort 54 dans le manchon 49a,49b.

Ainsi la platine 11 de support de l'ensemble constitué par les enceintes 3,5 et le pyromètre 2, prend appui de manière élastique sur les ressorts 54 eux-mêmes en appui sur les plots fixes 53 portés par les profilés fixes 47. L'assemblage 2,3 et 5 est de préférence complété par un manchon calorifique 57 enveloppant l'enceinte extérieure 5.

Le raccord 8 formant mandrin de liaison entre le fond 7 et le tube de visée 30 est constitué, dans l'exemple représenté, de la manière suivante :
- il comporte deux demi-coquilles 58 et 59 juxtaposées suivant l'axe X-X, la demi-coquille supérieure 58 étant fixée au fond 7 et enveloppant l'extrémité supérieure du tube de visée 3, de même que la demi-coquille inférieure 59. La demi-coquille supérieure 58 se termine par une partie tubulaire supérieure 61 qui peut être vissée à l'intérieur de l'extrémité inférieure du fond 7. Les demi-coquilles 58 et 59 sont munies d'oreilles radiales 61,62 respectives traversées par des organes de liaison élastiques 63 permettant de solidariser les deux demi-coquilles 58,59. Dans l'exemple décrit, ces organes de liaison 63 sont chacun constitués par un système boulon 64-écrous 65 traversant les oreilles 61,62 et par des rondelles élastiques 66 interposées entre l'oreille 61 et les écrous 65.

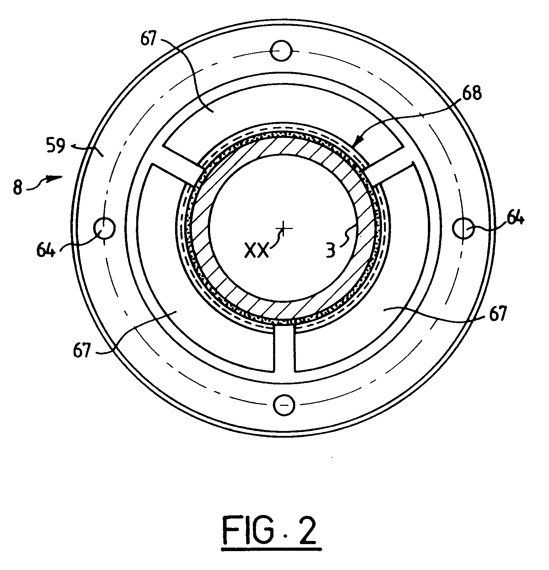

Les parois intérieures des demi-coquilles 58,59 convergent respectivement vers le fond 7 et vers le tube de visée 30, de façon à former des surfaces intérieures coniques complémentaires d'appui pour plusieurs mors 67 de positionnement des demi-coquilles 58,59. Les mors 67 sont interposés entre ces dernières et l'extrémité supérieure du tube 30 et fixés à ce dernier. Les mors 67, au nombre de trois dans l'exemple représenté (figure 2), sont répartis angulairement autour du tube 30 et présentent des faces extérieures coniques dimensionnées pour venir en appui sur les faces intérieures coniques complémentaires des demi-coquilles 58 et 59. Un ruban 68 en matériau réfractaire isolant et compressible, par exemple en amiante, est interposé entre les mors 67 et le tube 30, pour éviter une pression directe des mors sur le tube 30, qui pourrait endommager ce dernier, qui peut avantageusement être constitué en carbure de silicium.

Un isolant thermique 20, par exemple une couche de laine de verre, est disposé sur la voûte 1 autour du tube 3, au-dessous de la demi-coquille 59.

Les avantages techniques du dispositif support qui vient d'être décrit, outre ceux déjà mentionnés sont les suivants.

La fixation de l'enceinte extérieure 5 sur la voûte 1 par l'intermédiaire des amortisseurs 12 permet d'absorber des vibrations, évite par conséquent une rupture éventuelle du tube 30, et supprime les problèmes de dilatation différentielle.

La fixation du tube de visée 30 à l'enceinte extérieure 5 par un raccord 8 assurant une liaison élastique grâce aux dispositifs 63, permet d'absorber une dilatation différentielle entre le tube 30 et l'enceinte 5. Cette fixation élastique du tube 30 autorise également son remplacement aisé, par desserrage des boulons 64 et des ressorts 66 permettant un écartement des demi-coquilles 58,59. Elle facilite également un centrage correct du tube 30, indispensable pour la visée dans l'axe X-X du pyromètre 2, et permet également le remplacement du tube 30 par d'autres tubes de différents diamètres, avec le cas échéant le changement des mors 67.

L'existence d'une seconde enceinte 5 permet le refroidissement du dispositif, en particulier du raccord-mandrin 8, par de l'air comprimé industriel, n'ayant subi aucun traitement de nettoyage. En effet cet air n'est pas en contact avec le pyromètre 2 et notamment son objectif. Le film de gaz neutre qui circule en permanence devant l'objectif du pyromètre 2, l'empêche par ailleurs d'être souillé par des fumées ou poussières provenant du four. Par ailleurs, l'inclinaison appropriée du conduit de sortie 39 de cet air sur le raccord 8 permet de refroidir plus efficacement ce dernier, de même que le tube 30 en carbure de silicium qui est un bon conducteur thermique.

Le débit de gaz neutre entre le pyromètre 2 et la première enceinte 3 est faible, limité à la valeur minimum nécessaire pour empêcher le gaz carbonique présent dans l'atmosphère du four 1, de pénétrer à l'intérieur du tube 30. Ainsi est réalisée une séparation des fonctions d'une part de refroidissement et d'autre part de balayage de l'objectif du pyromètre 2 et de l'intérieur du tube de visée 30, à l'intérieur duquel ne peuvent monter les gaz de combustion du four, dont le spectre d'absorption infrarouge pourrait perturber la mesure. D'autre part, le choix d'un gaz neutre est justifié par le fait qu'il convient d'éviter d'envoyer de l'air dans le four, ce qui provoquerait une combustion oxydante mal contrôlée et la formation de calamine sur les brames, s'il s'agit d'un four à brames.

L'ensemble du dispositif de support qui vient d'être décrit, avec le pyromètre 2, se loge sans difficulté entre la voûte 1 et des caillebotis 10 de circulation.

Un autre avantage du dispositif support selon l'invention est fourni par la facilité d'extraction du pyromètre 2 et de la première enceinte 3. Cette dernière est aisément démontable après enlèvement des écrous 23 et débranchement de la connexion électrique 25 ainsi que des conduites d'alimentation en gaz neutre. Ce démontage évite tout risque de détérioration par manipulation directe du pyromètre 2 lorsqu'une intervention sur celui-ci est nécessaire, et permet son remplacement aisé par un ensemble similaire, tandis que le pyromètre éventuellement endommagé peut être réparé en laboratoire.

Enfin le pyromètre 2 est convenablement centré dans la première enceinte 3 en haut et en bas, grâce aux nervures 28 qui l'entourent, maintenu axialement par la butée élastique 32, ainsi qu'en rotation par le bossage terminal 36 coopérant avec la butée 32.

L'invention est susceptible de diverses variantes d'exécution. Ainsi notamment la liaison démontable entre l'enceinte extérieure 5 et le tube de visée 30 peut être réalisée par tout autre raccord élastique que le raccord 8 représenté. De même la suspension de l'enceinte 5 sur les profilés 47 peut être obtenue par toutes suspensions élastiques équivalentes à celle constituée par les amortisseurs 12 décrits.

## Revendications

1. Dispositif support d'un pyromètre optique (2) et de son tube de visée (30), destiné à être monté sur la voûte (1) d'un four industriel, notamment un four à brames, de manière que la voûte soit traversée par le tube de visée, comprenant une enceinte (3) dans laquelle peut être placé le pyromètre (2), et des moyens pour faire circuler un gaz entre l'enceinte et le pyromètre, caractérisée en ce qu'il comprend une seconde enceinte (5) enveloppant de manière étanche la première enceinte, ainsi qu'un raccord (8) de centrage et de fixation démontable reliant la seconde enceinte au tube de visée.

2. Dispositif selon la revendication 1, caractérisé en ce que le raccord (8) de centrage de la seconde enceinte (5) comporte deux demi-coquilles (58,59) juxtaposées et enveloppant coaxialement le tube de visée (3), la demi-coquille supérieure (58) étant fixée à l'extrémité inférieure (7) de la seconde enceinte et solidarisée avec la demi-coquille inférieure (59) par des organes (63) de liaison élastiques, et ce raccord est pourvu de mors (67) de positionnement des demi-coquilles, interposés entre ces dernières et le tube de visée (30).

3. Dispositif selon la revendication 2, caractérisé en ce que les mors (67) sont répartis angulairement autour du tube de visée (30), et un ruban (68) en matériau réfractaire isolant et compressible est interposé entre le tube (30) et la face interne des mors.

4. Dispositif selon l'une des revendications 1 à 3, caractérisé en ce que la première enceinte (3) est montée dans la seconde enceinte (5) de manière aisément extractible de celle-ci, et comporte à cet effet un couvercle (22) muni d'une poignée (26) de préhension manuelle et de moyens (23) de fixation amovible à la seconde enceinte (5).

5. Dispositif selon l'une des revendications 1 à 4, caractérisé en ce qu'il est muni de moyens (38) pour faire circuler de l'air de refroidissement entre la seconde enceinte (5) et la première enceinte (3), ces moyens étant agencés pour insuffler l'air de préférence tangentiellement au sommet de l'espace intercalaire (6) entre les deux enceintes.

6. Dispositif selon la revendication 4, caractérisé en ce que la base (7) de la seconde enceinte est percée d'au moins un orifice (39) orienté de manière à évacuer l'air vers le raccord (8) de liaison avec le tube de visée (30).

7. Dispositif selon l'une des revendications 1 à 6, caractérisé en ce que la seconde enceinte (5) est fixée à sa base (7) à une platine support (11) montée sur la voûte (1) du four par une suspension élastique.

8. Dispositif selon la revendication 7, caractérisé en ce que la suspension élastique comporte plusieurs amortisseurs (12) répartis sur la platine (11) autour de la seconde enceinte (5), et dont chacun comprend une paire de systèmes élastiques (49,53,54,55) agencés respectivement au-dessus et au-dessous de la platine et coopérant avec des profilés appropriés (47) de la voûte (1) du four.

9. Dispositif selon la revendication 8, caractérisé en ce que chaque système élastique comporte un manchon (49a;49b) solidaire de la platine (11) et perpendiculaire à celle-ci, un plot (53), en appui sur le profilé fixe associé (47) et engagé dans le manchon (49a;49b) ainsi monté coulissant sur le plot, un ressort (54) disposé dans le manchon, en appui sur le plot et supportant élastiquement un fond (55) fixé au manchon et des moyens (56) de centrage du ressort dans le manchon, le manchon (49b) disposé sous la platine étant mécaniquement solidarisé avec celle-ci par l'intermédiaire d'un élément (51) fixé à la platine (11).

10. Dispositif selon l'une des revendications 1 à 9, caractérisé en ce que le gaz insufflé dans l'espace intercalaire (4) entre le pyromètre (2) et la première enceinte (3) est du gaz neutre, et l'air insufflé entre les deux enceintes (3,5) est de l'air industriel, non déshuilé ni dépoussiéré.
